# FASCICULE DE BREVET EUROPEEN

(11) **EP 1 434 009 B1**
(45) Date de publication et mention de la délivrance du brevet: **24.11.2010**
(21) Numéro de dépôt: 03293308.7
(22) Date de dépôt: 23.12.2003
(51) Int. Cl.: F24C 15/16, A47J 37/04

(54) **Support de broche, équipement comprenant un tel support et four électroménager comprenant un tel équipement.**
Spiessstütze, Gerät mit einer solchen Stütze und Elektroherd mit einem solchen Gerät
Spit support, equipment comprising such a support and electric oven comprising such an equipment

(30) Priorité: 23.12.2002 FR 0216536
(43) Date de publication de la demande: 30.06.2004
(73) Titulaire: FAGORBRANDT SAS, 92500 Rueil Malmaison (FR)
(72) Inventeur: Delafoy, Pierre-Antoine, 45000 Orléans (FR); Lefol, Emmanuel, 45770 Saran (FR); Faure, Pierre-Eric, 28000 Chartres (FR)
(74) Mandataire: Petit, Maxime

(56) Documents cités:
- NL-A- 7 706 187
- US-A- 2 985 096
- US-A- 3 691 937
- US-A- 5 171 951

## Description

L'invention concerne notamment un support de broche pour four du type électroménager.

Dans les fours électroménagers conventionnels, qu'ils soient électriques ou non, il est connu d'utiliser des supports de broche pour recevoir une broche sur laquelle sera, par exemple, embrochée une viande telle qu'une volaille ou un gibier aux fins de sa cuisson.

Un tel support de broche prend, par exemple comme décrit dans le document NL-7706187, l'allure d'un cadre rigide réalisé en fil métallique et dont la forme générale s'inscrit sensiblement dans un plan.

Le cadre qui forme une structure fermée comporte deux portions latérales et deux portions longitudinales.

Le four, quant à lui, comporte une cavité interne de cuisson qui est délimitée par une paroi formant les faces internes latérales, du fond, du dessous et du dessus de la cavité, la porte du four fermant cette cavité.

Sur les faces internes latérales, des éléments en relief aux formes convexes sont prévus afin de recevoir tout ou partie des portions latérales du cadre lorsque ce dernier est introduit dans la cavité du four par l'utilisateur.

Lorsque l'utilisateur pousse le cadre vers la face interne du fond de la cavité, le cadre coulisse, par l'intermédiaire de ses portions latérales, sur les éléments en relief qui, généralement, revêtent la forme de gradins ou d'emboutis.

Lorsque le cadre est entièrement logé à l'intérieur de la cavité, ses portions latérales prennent appui en totalité ou en partie seulement sur les éléments en relief, maintenant ainsi le support de broche en place à la hauteur désirée dans le four.

La broche portant la viande à cuire est positionnée sur le cadre aux deux emplacements prévus à cet effet.

Ces emplacements se matérialisent, par exemple, par des parties du cadre où le fil métallique est déformé en direction de la face interne du fond de la cavité de manière à former chacune une zone concave qui sert à recevoir une des deux extrémités de la broche.

On notera que le positionnement de la broche est généralement réalisé alors que le cadre n'est pas entièrement logé dans la cavité du four.

A l'intérieur de la cavité on positionne la broche également dans des orifices pratiqués dans les faces internes de la cavité afin que la broche puisse être mise en rotation par le moteur disposé derrière l'une de ces faces internes.

Un plat de récupération des graisses est introduit dans la cavité du four en partie basse afin de recueillir les graisses provenant de la cuisson de la viande qui est disposée au-dessus.

Ce plat repose lui aussi sur des éléments en relief aménagés sur les faces internes latérales de la paroi délimitant la cavité.

Lorsque la cuisson est terminée, l'utilisateur ouvre la porte du four et retire le support de broche et la broche de la cavité interne de cuisson pour sortir du four la viande embrochée.

Cependant, afin d'éviter que les graisses de cuisson qui continuent à s'égoutter de la viande, ne viennent salir la porte du four lors de l'opération, il est nécessaire que l'utilisateur, retire simultanément le plat de récupération des graisses et l'ensemble constitué du support de broche et de la broche.

Cette opération n'est pas aisée dans la mesure où l'utilisateur a bien souvent les deux mains occupées par la manipulation de la broche et du support de broche.

Ainsi, le retrait simultané du support de broche avec sa broche et du plat de récupération des graisses s'avère quasiment impossible à réaliser par une seule personne.

Il s'ensuit que les graisses viennent inévitablement salir la porte du four.

En outre, il convient de noter que cette manipulation se révèle également dangereuse pour l'utilisateur lorsque ce dernier essaye malgré tout de retirer simultanément le support et le plat.

La présente invention vise à remédier à au moins un des inconvénients précités en proposant un support de broche pour four du type électroménager comportant des moyens d'appui qui le rendent apte à coopérer avec une paroi délimitant une cavité interne au four, caractérisé en ce que le support de broche comporte des moyens de solidarisation qui le rendent apte à être solidaire d'un plat de récupération des graisses dans un four suivant au moins une direction de déplacement de l'équipement constitué du support et du plat et qui correspond à la direction de retrait de cet équipement du four

L'invention a également pour objet un équipement de four du type électroménager, comprenant :
- un support de broche comportant des moyens d'appui qui le rendent apte à coopérer avec une paroi délimitant une cavité interne au four,
- un plat de récupération des graisses,
caractérisé en ce que le support de broche comporte des moyens de solidarisation qui coopèrent avec des moyens complémentaires prévus sur le plat de récupération des graisses afin de solidariser le support au plat suivant au moins une direction de déplacement de l'équipement et qui correspond à la direction de retrait de cet équipement du four.

L'invention vise par ailleurs un four électroménager comportant :
- une paroi délimitant une cavité de cuisson interne au four et
- un équipement de four logé dans la cavité de cuisson, ledit équipement comprenant :
   - un support de broche comportant des moyens d'appui qui coopèrent avec des moyens complémentaires prévus sur la paroi du four afin que ledit support prenne appui sur cette paroi,
   - un plat de récupération des graisses,
caractérisé en ce que le support de broche comporte des moyens de solidarisation qui coopèrent avec des moyens complémentaires prévus sur le plat de récupération des graisses afin de solidariser le support au plat suivant au moins une direction de déplacement de l'équipement et qui correspond à la direction de retrait de cet équipement du four

Il s'agit ainsi d'un nouveau support de broche qui est apte à être rendu solidaire du plat de récupération des graisses lors du mouvement de retrait du support de broche du four, tout en étant apte à venir en appui sur des éléments prévus à cet effet dans la paroi définissant la cavité interne du four.

Cela permet donc d'éviter les salissures sur la porte du four puisque, lors du retrait du support de broche du four, les graisses continuent de s'écouler dans le plat de récupération des graisses.

En outre, le support de broche, lorsqu'il supporte une viande à rôtir embrochée, continue à être supporté principalement par la paroi définissant la cavité interne du four, ce qui simplifie les modifications à apporter à un support de broche conventionnel et à un plat de récupération des graisses conventionnel.

Dans la version la plus simple de l'invention, il suffit de modifier le support pour que le plat et le support soient liés l'un à l'autre lors d'un mouvement de retrait du four.

Cela ne nécessite donc pas d'apporter des modifications plus importantes pour lier le support et le plat suivant une autre direction (par exemple, verticale).

Il convient de noter que, même dans une version où le support de broche et le plat sont solidarisés suivant au moins deux directions dont celle de retrait du four, le poids résultant du support de broche et de la broche associée est toujours principalement supporté par la paroi définissant la cavité interne du four.

Selon une caractéristique, le support de broche se présente sous la forme d'un cadre rigide qui possède au moins deux emplacements distincts aptes à recevoir chacun une extrémité d'une broche.

Selon une caractéristique, le cadre rigide est réalisé en fil métallique.

Selon un premier mode de réalisation de l'invention, le cadre du support de broche forme une structure fermée.

Selon une caractéristique, les moyens de solidarisation du support sont rapportés audit cadre.

Ainsi, les modifications à apporter à un support de broche conventionnel sont simples à effectuer et ne remettent que très peu en cause la fabrication d'un tel support de broche.

Plus particulièrement, les moyens de solidarisation du support de broche sont formés de pattes de solidarisation dont au moins une partie est apte à s'engager dans des évidements pratiqués dans le plat de récupération des graisses.

Les modifications à apporter à un plat de récupération des graisses conventionnel pour coopérer avec le support de broche selon l'invention sont donc elles aussi mineures, voire nulles.

Par exemple, les pattes de solidarisation sont constituées de portions droites de fil métallique rapportées sensiblement perpendiculairement à la forme générale du cadre.

Il s'agit là d'un aménagement très simple à prévoir sur un cadre existant.

Selon une variante du premier mode de réalisation, les moyens de solidarisation du support sont formés de zones du cadre qui sont déformées localement de manière à coopérer avec des aménagements complémentaires prévus dans le plat de récupération des graisses.

Les zones ainsi déformées assurent une grande stabilité et une bonne rigidité du cadre.

Selon une caractéristique de cette variante, les zones déformées du cadre sont aptes à s'engager dans des évidements aménagés dans le plat de récupération des graisses.

Selon une autre caractéristique de cette variante, les zones déformées du cadre ont une forme en U.

Selon un deuxième mode de réalisation, le cadre du support de broche forme une structure ouverte possédant deux extrémités qui constituent les moyens de solidarisation du support au plat de récupération des graisses.

On remarquera qu'un cadre à structure ouverte facilite les manipulations de la broche par l'utilisateur puisqu'un espace libre est ménagé entre les deux extrémités du cadre.

Selon une caractéristique, les extrémités du cadre en fil métallique sont courbées sensiblement perpendiculairement à la forme générale du cadre et sont aptes à s'engager dans des évidements pratiqués dans le plat de récupération des graisses.

La forme du cadre constituant le support de broche selon l'invention est obtenue aisément à partir de la forme initiale d'un cadre conventionnel de structure fermée en ouvrant ce dernier et en recourbant les extrémités.

Là encore, les modifications à apporter à un plat de récupération des graisses conventionnelles pour coopérer avec le support de broche selon le deuxième mode de réalisation de l'invention sont mineures, voire nulles.

Selon une autre caractéristique, l'une des extrémités courbées du cadre est placée à proximité d'un des emplacements qui est apte à recevoir une extrémité d'une broche, la partie du cadre disposée entre ladite extrémité courbée et l'emplacement considéré étant recourbée en direction de la partie du cadre disposée immédiatement en amont dudit emplacement par rapport à l'extrémité.

On rigidifie ainsi une zone du cadre ouvert qui va devoir supporter une partie du poids de la broche et de la viande embrochée.

D'autres caractéristiques apparaîtront au cours de la description qui va suivre, donnée uniquement à titre d'exemple et faite en référence aux dessins annexés sur lesquels :
- la figure 1 est une représentation schématique d'un équipement pour four électroménager selon un premier mode de réalisation de l'invention ;
- la figure 2 est une représentation schématique d'un équipement représenté à la figure 1, après son assemblage et son installation dans un four du type électroménager ;
- la figure 3 est une représentation schématique d'un équipement pour four électroménager selon un deuxième mode de réalisation de l'invention ;
- la figure 4 est une variante de réalisation de l'équipement représenté à la figure 3 ;
- les figures 5 et 6 sont deux variantes de réalisation de l'équipement représenté à la figure 2.

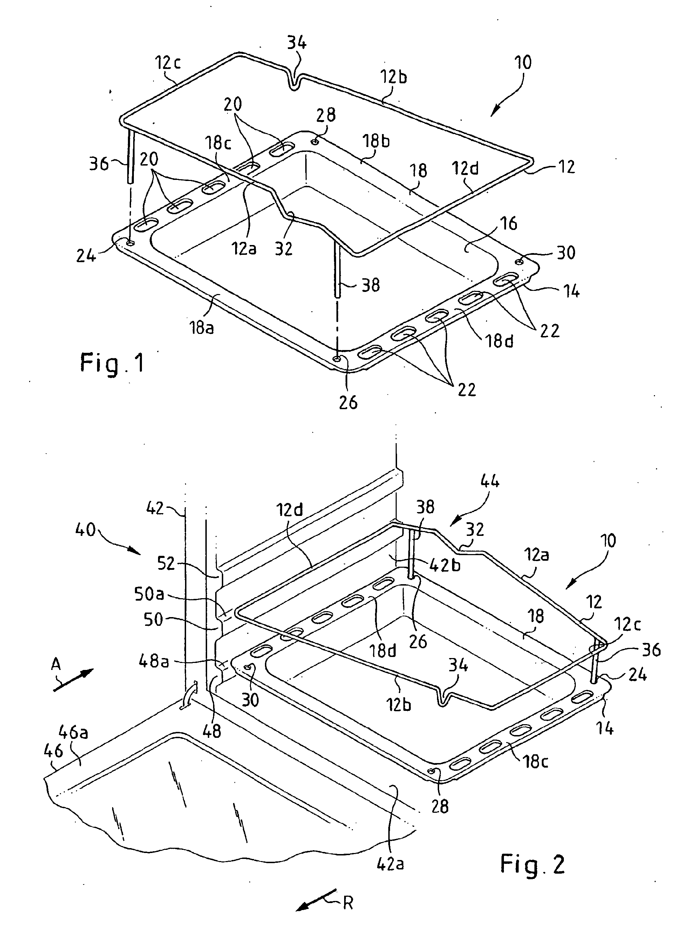

Comme représenté à la figure 1 et désigné par la référence générale notée 10, un équipement pour four du type électroménager selon l'invention comprend un support de broche 12, et un plat de récupération des graisses 14.

Le plat de récupération des graisses 14 présente une partie centrale formant un creux 16, destiné à récupérer les graisses et, à la périphérie de ce dernier, une bande formant un rebord périphérique 18 et permettant notamment la préhension du plat par l'utilisateur, ainsi que son installation et son maintien à l'intérieur d'un four.

Le rebord 18 comporte deux grands côtés longitudinaux ou portions longitudinales 18a et 18b disposés en vis-à-vis et deux petits côtés latéraux ou portions latérales 18c et 18d, également disposés en vis-à-vis.

De façon conventionnelle, plusieurs ouvertures de formes oblongues 20 et 22 sont pratiquées dans l'épaisseur du rebord périphérique 18 au droit des portions latérales 18c et 18d.

On notera que les portions latérales 18c et 18d sont identiques de même que les portions longitudinales 18a et 18b, ce qui permet ainsi d'introduire le plat dans un four soit par la portion longitudinale 18a soit par la portion longitudinale 18b.

Quatre évidements 24, 26, 28 et 30 sont respectivement aménagés aux quatre coins du plats 14 et, par exemple, se présentent sous la forme d'orifices qui traversent la bande constituant le rebord périphérique 18 dans son épaisseur.

Le support de broche 12 se présente sous la forme d'un cadre périphérique rigide qui est plus particulièrement réalisé en fil métallique.

Dans le mode de réalisation de la figure 1, le cadre forme une structure fermée de forme générale sensiblement plane.

On notera toutefois que la forme générale plane du cadre n'est pas une nécessité pour que l'invention puisse être mise en oeuvre.

Le cadre 12 comporte deux portions longitudinales 12a et 12b, parallèles entre elles, disposées en vis-à-vis, ainsi que deux portions latérales 12c et 12d également parallèles entre elles et disposées en vis-à-vis ;

Sur chacune des portions longitudinales 12a et 12b est prévu un emplacement noté 32 pour la portion longitudinale 12a et 34 pour la portion longitudinale 12b.

Ces deux emplacements ne sont pas disposés en vis-à-vis l'un de l'autre mais de manière décalée, comme représenté sur la figure 1, et sont destinés chacun à recevoir une extrémité d'une broche non représentée.

Chacun de ces emplacements se présente sous la forme d'une déformation locale plus ou moins prononcée dirigée vers le bas dans la représentation qui faite sur la figure 1, de manière à ce que la zone locale ainsi déformée de manière concave constitue un logement apte à recevoir une des extrémités de la broché précitée.

Une telle disposition est connue sur les supports de broche utilisés dans les fours électroménagers et ne sera donc pas davantage détaillée ici.

Le support de broche 12 selon l'invention comporte également deux pattes réalisées par des portions de fil métallique qui sont rapportés au cadre de façon sensiblement perpendiculaire à la forme générale de ce dernier, par exemple, par soudage.

Ces pattes 36, 38 constituent des moyens de solidarisation qui rendent le support de broche 12 apte à être solidaire du plat de récupération des graisses 14 suivant au moins une direction de déplacement de l'équipement constitué du support et du plat par rapport au four, comme on le verra ultérieurement lors de la description faite en référence à la figure 2.

La direction de déplacement en question correspond à la direction suivant laquelle l'équipement considéré est retiré du four.

Comme représenté sur la figure 1, cette direction est perpendiculaire au plan dans lequel le rebord périphérique 18 du plat 14 s'étend.

Les moyens de solidarisation 36, 38 précités coopèrent avec des moyens complémentaires prévus sur le plat de récupération des graisses 14, et qui sont en l'espèce les évidements 24 et 26.

On notera également que le support de broche peut également être solidarisé au plat par l'intermédiaire des autres évidements 28 et 30 aménagés dans la portion longitudinale 18b.

Lorsque les extrémités des pattes 36 et 38 sont engagées dans les évidements respectifs 24 et 26 du plat 14, l'équipement constitué du support de broche avec sa broche et du plat peut être translaté suivant une direction perpendiculaire à l'axe d'alignement des pattes 36 et 38, comme si cet équipement était formé d'une seule et même pièce.

On notera que l'équipement ainsi constitué selon l'invention est particulièrement simple à fabriquer dans la mesure où il reprend un support de broche et un plat de récupération des graisses conventionnels.

En effet, les seules modifications à apporter pour mettre en oeuvre l'invention sont celles consistant à rapporter des moyens de solidarisation (par exemple, les pattes 36 et 38) au support et à pratiquer des évidements aux quatre coins du plat de récupération des graisses 14 (par exemple sous la forme des orifices 24, 26, 28 et 30).

On notera que les évidements 24 et 26, 28 et 30 pratiqués dans le plat de récupération des graisses 14 peuvent être débouchants ou non.

Dans l'hypothèse où ces évidements sont débouchants, les extrémités des pattes 36 et 38 vont être engagées en force dans ces derniers, ce qui n'est pas nécessaire lorsque les évidements ne sont pas débouchants et que les extrémités des pattes 36 et 38 reposent au fond de ces derniers par leur extrémité inférieure.

Sur la figure 2, on a représenté l'équipement de la figure 1 installé dans un four électroménager 40 partiellement représenté de façon schématique, une fois que le support de broche est attelé au plat de récupération des graisses.

Comme représenté sur la figure 2, le four 40 comporte une paroi 42 qui délimite une cavité de cuisson interne au four 44 par l'intermédiaire de ces faces internes latérales, de sa face interne du fond, de sa face interne du dessous et de sa face interne du dessus.

Sur la figure 2, seules sont représentées la face interne du dessous 42a et une des faces internes latérales 42b de la paroi 42.

Une porte 46 articulée présentant une face interne 46a est représentée en position ouverte sur la figure 2 et, lorsqu'elle est en position fermée, elle obture la cavité interne de cuisson du four.

La face interne latérale 42b est pourvue d'éléments en relief de formes convexes aménagés, par exemple, sous la forme de gradins 48, 50 et 52.

Lorsque l'équipement constitué du support de broche 12 et du plat de récupération des graisses 14 assemblés l'un avec l'autre est introduit dans le four par translation de ce dernier, dans le sens indiqué par la flèche référencée A, la portion latérale 18d du rebord périphérique 18 du plat 14 prend appui sur la partie supérieure du gradin 48, tandis que la portion latérale 12d du cadre 12 du support de broche prend appui sur la partie supérieure 50a du gradin 50.

Toutefois, l'appui de cette portion latérale peut ne pas être réalisé lorsqu'aucune viande à rôtir n'est placée sur le support de broche.

Dès lors que ce ou ces appuis sont réalisés, l'utilisateur peut pousser l'équipement à l'intérieur du four, dans la cavité interne 44, en faisant coulisser la portion latérale 18d du rebord périphérique 18 et la portion latérale 12d du cadre 12 respectivement sur les parties supérieures 48a et 50a des gradins 48 et 50.

On notera que le positionnement de l'équipement par l'intermédiaire de la portion latérale 18c du rebord périphérique 18 et de la portion latérale 12c du cadre est réalisé de façon identique sur l'autre face interne latérale non représentée du four.

Ainsi, les portions latérales 12c et 12d du cadre du support de broche selon l'invention constituent des moyens d'appui qui rendent le support de broche apte à coopérer avec les faces internes latérales de la paroi 42 du four. Comme souligné plus haut, ces appuis sont généralement constitués lorsqu'une viande embrochée est positionnée sur le support mais pas nécessairement en l'absence de la viande.

Ceci est particulièrement avantageux dans la mesure où la totalité du poids exercé sur le cadre 12 par la broche et la viande embrochée sur cette dernière est supporté en partie par les portions latérales 12c et 12d qui reposent sur les gradins concernés de la paroi du four.

Toutefois, dans la mesure où le support de broche selon l'invention est uniquement fixé au plat de récupération des graisses par l'intermédiaire des deux pattes 36 et 38, si le cadre n'était pas supporté par l'intermédiaire de ses portions latérales sur les gradins de la paroi du four, il faudrait que des pattes supplémentaires soient rapportées audit cadre afin de s'engager dans les évidements correspondants 28 et 30, répartissant ainsi la charge exercée sur ce cadre.

L'invention permet ainsi de pouvoir arroser une viande embrochée pendant sa cuisson en retirant en une seule opération, à la fois le support de broche et le plat de récupération des graisses disposé en dessous, dans le sens indiqué par la flèche notée R sur la figure 2.

On évite ainsi des salissures sur la face interne 46a de la porte 46 du four, de même que des manipulations qui peuvent s'avérer dangereuses pour l'utilisateur.

Par ailleurs, lorsque la broche est installée sur le support de broche 12, l'invention permet de positionner la broche dans l'axe du moteur non représenté en effectuant une simple translation de l'équipement constitué du support de broche et du plat de récupération des graisses.

L'utilisateur n'a donc plus d'effort à fournir pour positionner la broche dans l'axe du moteur, ce qui est particulièrement pénible et dangereux lorsque le four est très chaud.

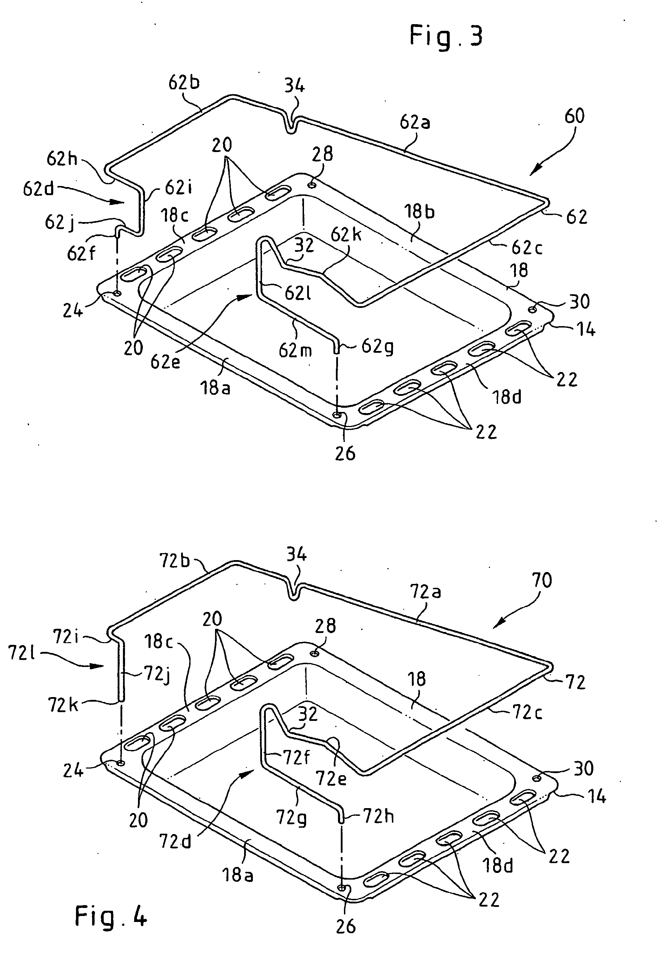

Sur la figure 3 est représenté un deuxième mode de réalisation d'un équipement pour four électroménager selon l'invention.

L'équipement représenté, noté 60, comprend un support de broche 62 qui est pourvu de moyens permettant de le solidariser au moins dans une direction au plat de récupération des graisses identique à celui des figures 1 et 2.

Dans la mesure où les éléments indiqués sur les figures 3 et 4 sont identiques à ceux des figures 1 et 2, ils conserveront les mêmes références.

Le support de broche 62 se présente sous la forme d'un cadre périphérique rigide formant une structure ouverte contrairement à la structure fermée du cadre 12 représenté sur les figures 1 et 2.

Le cadre 62 comporte une grande portion longitudinale arrière 62a et deux petites portions latérales 62b et 62c qui sont disposées en vis-à-vis l'une de l'autre.

Ces trois portions définissent la forme générale du cadre qui s'inscrit sensiblement dans un plan.

Le cadre 62 comporte également deux portions avant 62d et 62e disposées respectivement en amont des extrémités 62f et 62g du cadre qui constituent des moyens de solidarisation du support 62 au cadre 14.

Les portions 62d et 62e sont conformées de manière à ménager entre elles un espace libre permettant l'accès à l'intérieur du cadre.

Les portions 62d et 62e correspondent à des portions droites de fil métallique qui ont été déformées afin d'être disposées dans un même plan vertical sensiblement perpendiculaire au plan dans lequel s'inscrit la forme générale du cadre.

La portion 62d est constituée d'un premier tronçon 62h qui s'étend sur une faible longueur dans le plan correspondant à la forme générale du cadre, à partir d'une extrémité de la portion latérale 62b et en direction de l'extrémité opposée de la portion latérale 62c.

La portion 62d comprend également, d'une part, un deuxième tronçon 62i qui s'étend perpendiculairement au premier tronçon, dans un plan perpendiculaire au plan défini par les portions 62a, 62b, et 62c, ce deuxième tronçon s'étendant sur une faible hauteur et, d'autre part, un troisième tronçon 62j qui s'étend perpendiculairement au deuxième tronçon, toujours dans le même plan vertical perpendiculaire au plan défini par les portions 62a, 62b, 62c.

Le troisième tronçon 62j forme ainsi un retour et se termine par l'extrémité 62f qui est recourbée, toujours dans le plan vertical, vers le bas afin de pouvoir être insérée dans l'un des évidements correspondants du plat 14.

La portion 62e comporte quant à elle un premier tronçon 62k qui s'étend à partir d'une extrémité de la portion latérale 62c, perpendiculairement à cette dernière, en direction de l'extrémité opposée de la portion latérale 62b, sur une longueur supérieure à celle du premier tronçon 62h de la portion 62d.

Cette portion 62e comprend un deuxième tronçon 621 qui s'étend à partir de l'extrémité libre du premier tronçon, perpendiculairement au plan défini par les portions 62a, 62b, et 62c vers le bas, sur une faible hauteur qui correspond à celle du deuxième tronçon 62i de la portion latérale 62d.

La portion 62e comprend également un troisième tronçon 62m qui s'étend dans le même plan vertical que le deuxième tronçon 62l et qui correspond également au plan vertical des tronçons 62h, 62i et 62j de la portion 62d.

Le troisième tronçon 62m s'étend perpendiculairement au deuxième tronçon 62l de manière à former un retour par rapport au premier tronçon 62k.

L'extrémité 62g est recourbée vers le bas en direction du plat de récupération des graisses afin de pouvoir être insérée dans l'évidement correspondant 26 de ce dernier.

La structure repliée des tronçons 62d et 62e en amont des extrémités recourbées du cadre permet de rigidifier ces zones du cadre et ainsi de conférer audit cadre une résistance mécanique générale suffisante pour l'utilisation qui en est faite.

On notera que les emplacements 32 et 34 représentés sur la figure 1 pour recevoir chacun une extrémité d'une broche non représentée sont également identiques et placés aux mêmes endroits sur le cadre 62 de la figure 3.

Le renfort mécanique assuré par la structure de la portion 62e est particulièrement utile pour supporter le poids transmis par la broche dont une extrémité va reposer à l'emplacement 32.

La figure 4 illustre une variante de réalisation de l'équipement 60 représenté à la figure 3 dans laquelle l'équipement 70 est constitué d'un plat de récupération des graisses 14 et d'un support de broche 72 à structure ouverte, dont une extrémité diffère de celle du support représenté à la figure 3.

Le support de broche 70 comporte des portions 72a, 72b, 72c identiques aux portions 62a, 62b, 62c du cadre 62 de la figure 3.

Le support de broche 72 comporte également une première portion avant 72d identique à la portion 62e de la figure 3 et dont les différents tronçons 72e, 72f, et 72g sont respectivement identiques aux tronçons 62k, 62l, et 62m de la figure 3.

Le cadre 72 comporte en dernier lieu une deuxième portion avant 72l qui s'étend, par l'intermédiaire d'un premier tronçon 72i, à partir de l'extrémité latérale 72b, sur une très courte distance en direction de l'extrémité opposée de la portion latérale 72c, puis s'étend suivant un deuxième tronçon 72j, perpendiculairement, vers le bas, dans un plan perpendiculaire au plan défini par les portions 72a, 72b, et 72c.

Ce deuxième tronçon 72j se termine par une extrémité 72k destinée à être insérée dans l'évidement correspondant 24 du plat 14.

On notera que l'extrémité 72k est courbée sensiblement perpendiculairement par rapport à la forme générale du cadre.

Le retour formé par le premier tronçon 72i dans le plan défini par les portions 72a, 72b, 72c confère à cette partie du cadre une certaine rigidité de même que le déploiement du deuxième tronçon 72j dans un plan perpendiculaire vertical.

On notera que les structures d'équipements représentées sur les figures 3 et 4 présentent les mêmes avantages que celle décrite en référence à l'équipement 10 représenté sur les figures 1 et 2.

En outre, la forme du support de broche 62 ou 72 permet de récupérer les jus de graisse accumulés dans le plat 14 et d'arroser la viande pendant sa cuisson, tout en restant en permanence au-dessus du plat, empêchant ainsi tout risque de dépôt de graisse hors du plat et notamment sur la porte 46.

De plus, l'ouverture ainsi ménagée entre les portions avant 62d et 62e pour l'équipement 60 de la figure 3, et des portions avant 72l et 72d pour l'équipement 70 de la figure 4, permet à l'utilisateur d'accéder plus facilement à la broche lorsque celle-ci est en position sur le support, par exemple, pour venir la retirer de ce support ou même pour effectuer différentes manipulations à l'intérieur du four.

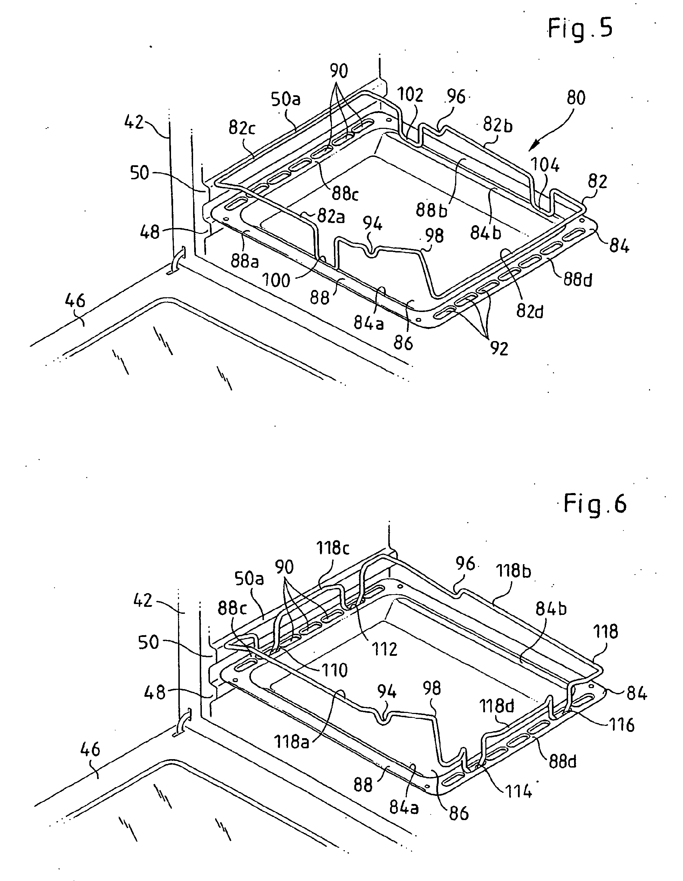

Selon une variante de réalisation du premier mode de réalisation des figures 1 et 2, un équipement 80 pour four du type électroménager selon l'invention comprend un support de broche 82, et un plat de récupération des graisses 84, ainsi que représenté sur la figure 5.

Le plat de récupération des graisses 84 présente une partie centrale formant un creux 86, destiné à récupérer les graisses et, à la périphérie de ce dernier, une bande formant un rebord périphérique 88 et permettant notamment la préhension du plat par l'utilisateur, ainsi que son installation et son maintien à l'intérieur d'un four.

Le rebord 88 comporte deux grands côtés longitudinaux ou portions longitudinales 88a et 88b disposés en vis-à-vis et deux petits côtés latéraux ou portions latérales 88c et 88d, également disposés en vis-à-vis.

De façon conventionnelle, plusieurs évidements ou ouvertures de formes oblongues 90 et 92 sont pratiquées dans l'épaisseur du rebord périphérique 88 au droit des portions latérales 88c et 88d.

On notera que les portions latérales 88c et 88d sont identiques de même que les portions longitudinales 88a et 88b, ce qui permet ainsi d'introduire le plat dans un four soit par la portion longitudinale 88a soit par la portion longitudinale 88b.

Le plat comporte également deux évidements intérieurs aménagés dans les portions 88a et 88b de la bande 88 afin de constituer chacun un décroché ou épaulement dans l'épaisseur de la bande.

Le support de broche 82 se présente sous la forme d'un cadre périphérique rigide qui est plus particulièrement réalisé en fil métallique.

Le cadre forme une structure fermée de forme générale sensiblement plane.

On notera toutefois que la forme générale plane du cadre n'est pas une nécessité pour que l'invention puisse être mise en oeuvre.

Le cadre 82 comporte deux portions longitudinales 82a, 82b, parallèles entre elles, disposées en vis-à-vis, ainsi que deux portions latérales 82c et 82d également parallèles entre elles et disposées en vis-à-vis.

Sur chacune des portions longitudinales 82a et 82b est prévu un emplacement noté 94 pour la portion longitudinale 82a et 96 pour la portion longitudinale 82b.

Ces deux emplacements ne sont pas disposés en vis-à-vis l'un de l'autre mais de manière décalée, comme représenté sur la figure 5, et sont destinés chacun à recevoir une extrémité d'une broche non représentée.

Chacun de ces emplacements se présente sous la forme d'une déformation locale plus ou moins prononcée dirigée vers le bas pour l'emplacement 94, de manière à ce que la zone locale ainsi déformée constitue un logement apte à recevoir une des extrémités de la broche précitée.

Une telle disposition est connue sur les supports de broche utilisés dans les fours électroménagers et ne sera donc pas davantage détaillée ici.

Le support de broche comporte également des moyens de solidarisation du support 82 au plat 84 qui sont formés de zones du cadre déformées localement vers le bas, sensiblement perpendiculairement à la forme générale du cadre.

Comme représenté sur la figure 5, les zones déformées se présentent sous la forme de décrochés en forme de U 100, 102 et 104 assurant la fonction de pieds pour le support qui vient ainsi en appui sur le plat 84.

Ces pieds sont, par exemple, au nombre de trois mais il pourrait n'y en avoir que deux ou bien plus de trois sans que cela affecte le principe de l'invention.

Les deux pieds 102 et 104 reposent sur l'épaulement intérieur 84b tandis que le pied 100 repose sur l'épaulement intérieur 84a.

Lors d'un mouvement d'avance ou de retrait par rapport au four du support de broche 82 ou du plat de récupération des graisses 84, tout l'équipement constitué du support et du plat se déplace compte tenu du fait que les pieds 100, 102 et 104 sont, dans ce mouvement, en butée contre la paroi verticale de leur épaulement intérieur respectif.

Les zones déformées 100, 102 et 104 du cadre assurent ainsi la solidarisation du support 82 au plat 84 dans une direction, lors du mouvement décrit plus haut.

La variante du support à trois pieds assure une grande stabilité au support, notamment lorsqu'il est équipé de sa broche et d'une viande embrochée. Les déformations ainsi créées confèrent également une bonne rigidité mécanique au support.

On notera que le support 82 présente également une portion 98 coudée horizontalement vers l'intérieur du cadre, apportant ainsi une rigidité mécanique à la partie du cadre (emplacement 94) qui va recevoir une extrémité de la broche.

Cette variante de réalisation possède tous les avantages qui ont été décrits pour l'équipement des figures 1 et 2, de même que les caractéristiques qui n'ont pas été reprises ici mais qui sont communes aux figures 1, 2 et à la figure 5.

La variante de réalisation illustrée à la figure 6 comporte les mêmes éléments que ceux de la figure 5 et ils ne seront donc pas décrits à nouveau ici. Les éléments inchangés conservent les mêmes références.

Toutefois, sur la figure 6, les zones déformées du cadre qui ont la forme de décrochés en U ou de créneaux sont au nombre de quatre, 110, 112, 114 et 116, et sont réalisées dans les portions latérales 118c et 118d du cadre et non dans les portions longitudinales 118a et 118b.

Par ailleurs, ces pieds 110, 112, 114 et 116 sont aptes à s'engager dans des évidements constitués par les ouvertures 90 et 92 des portions latérales 88c et 88d du plat 84.

En outre, afin de constituer des moyens d'appui avec la paroi du four, les portions latérales du support présentent également des déformations horizontales.

En effet, chaque portion latérale 118c, 118d est non seulement déformée localement en deux zones vers le bas afin de former un U, mais également dans un plan horizontal, vers l'intérieur du cadre.

Ceci permet aux pieds 110, 112, 114 et 116 de s'engager dans des évidements 90 et 92 du plat, tandis que les portions latérales horizontales du cadre sont aptes à être en appui sur les gradins 50 du four.

Ainsi, le support de broche 118 est rendu solidaire du plat 84 dans deux directions : la direction d'avance dans le four ou de retrait du four et la direction perpendiculaire à celle-ci.

Les quatre pieds assurent une bonne stabilité au support de broche mais il aurait toutefois été possible de n'avoir que deux pieds d'un côté et un de l'autre.

En outre, cette variante de réalisation possède tous les avantages qui ont été décrits pour la variante de la figure 5 et le mode de réalisation des figures 1 et 2.

Cependant, dans la variante de la figure 6, la liaison entre le support de broche et le plat est plus fiable que pour la variante de la figure 5.

Par ailleurs, il est également possible de réaliser une autre variante en associant les caractéristiques des deux variantes des figures 5 et 6.

Ainsi, par exemple, le cadre du support de broche de cette autre variante comporte au moins trois zones déformées localement afin de constituer des pieds pour le support, deux d'entre elles coopérant avec des ouvertures 90, 92 et la troisième pour la stabilité avec l'épaulement 84a ou 84b.

La structure inverse avec deux pieds qui coopèrent avec l'un et/ou l'autre des épaulements 84a, 84b et le troisième pied qui coopère avec l'une des ouvertures 90, 92 est également envisageable.

## Revendications

1. Support de broche (12 ; 62 ; 72) pour four du type électroménager comportant des moyens d'appui (12c, 12d ; 62b, 62c ; 72b, 72c) qui le rendent apte à coopérer avec une paroi délimitant une cavité interne au four, **caractérisé en ce que** le support de broche comporte des moyens de solidarisation (36,38 ; 62f, 62g ; 72k, 72d) qui le rendent apte à être solidaire d'un plat de récupération des graisses (14) dans un four, suivant au moins une direction de déplacement de l'équipement (10 ; 60 ; 70) constitué du support et du plat et qui correspond à la direction de retrait de cet équipement du four.

2. Support de broche selon la revendication 1, **caractérisé en ce qu'**il se présente sous la forme d'un cadre rigide (12 ; 62 ; 72) qui possède au moins deux emplacements (32, 34) distincts aptes à recevoir chacun une extrémité d'une broche.

3. Support de broche selon la revendication 2, **caractérisé en ce que** le cadre rigide est réalisé en fil métallique.

4. Support de broche selon la revendication 2 ou 3, **caractérisé en ce que** le cadre rigide (12) forme une structure fermée.

5. Support de broche selon la revendication 4, **caractérisé en ce que** les moyens de solidarisation du support sont rapportés audit cadre.

6. Support de broche selon la revendication 5, **caractérisé en ce que** les moyens de solidarisation du support sont formés de pattes de solidarisation (36,38) dont au moins une partie est apte à s'engager dans des évidements (24, 26) pratiqués dans le plat de récupération des graisses (14).

7. Support de broche selon les revendications 3 et 6, **caractérisé en ce que** les pattes de solidarisation (36, 38) sont constituées de portions droites de fil métallique rapportées sensiblement perpendiculairement à la forme générale du cadre.

8. Support de broche selon la revendication 4, **caractérisé en ce que** les moyens de solidarisation du support sont formés de zones du cadre qui sont déformées localement de manière à coopérer avec des aménagements complémentaires prévus dans le plat de récupération des graisses.

9. Support de broche selon la revendication 8, **caractérisé en ce que** les zones déformées du cadre sont aptes à s'engager dans des évidements aménagés dans le plat de récupération des graisses.

10. Support de broche selon la revendication 8 ou 9, **caractérisé en ce que** les zones déformées du cadre ont une forme en U.

11. Support de broche selon la revendication 2 ou 3, **caractérisé en ce que** le cadre rigide (62 ; 72) forme une structure ouverte possédant deux extrémités (62f, 62g ; 72k, 72h) qui constituent les moyens de solidarisation du support au plat de récupération des graisses (14).

12. Support de broche selon les revendications 3 et 11, **caractérisé en ce que** les extrémités (62f, 62g ; 72k, 72h) du cadre en fil métallique sont courbées sensiblement perpendiculairement à la forme générale du cadre et sont aptes à s'engager dans des évidements (24, 26) pratiqués dans le plat de récupération des graisses.

13. Support de broche selon la revendication 12, **caractérisé en ce que** l'une (62g ; 72h) des extrémités courbées du cadre est placée à proximité d'un (32) des emplacements qui est apte à recevoir une extrémité d'une broche, la partie du cadre disposée entre ladite extrémité courbée et l'emplacement considéré étant recourbée en direction de la partie (62k ; 72e) du cadre disposée immédiatement en amont dudit emplacement par rapport à l'extrémité.

14. Equipement (10 ; 60 ; 70) de four du type électroménager, comprenant :
- un support de broche (12 ; 62 ; 72) comportant des moyens d'appui (12c, 12d ; 62b, 62c ; 72b, 72c) qui le rendent apte à coopérer avec une paroi (42) délimitant une cavité (44) interne au four,
- un plat de récupération des graisses (14),
**caractérisé en ce que** le support de broche comporte des moyens de solidarisation (36, 38 ; 62f, 62 g ; 72k, 72d) qui coopèrent avec des moyens complémentaires (24, 26) prévus sur le plat de récupération des graisses afin de solidariser le support au plat suivant au moins une direction de déplacement de l'équipement et qui correspond à la direction de retrait de cet équipement du four.

15. Four électroménager (40) comportant :
- une paroi (42) délimitant une cavité de cuisson interne (44) au four et
- un équipement de four (10 ; 60 ; 70) logé dans la cavité de cuisson, ledit équipement comprenant :
• un support de broche (12 ; 62 ; 72) comportant des moyens d'appui (12c, 12d ; 62b, 62c ; 72b, 72c) qui coopèrent avec des moyens complémentaires (50) prévus sur la paroi (42) du four afin que ledit support prenne appui sur cette paroi,
• un plat de récupération des graisses (14),
**caractérisé en ce que** le support de broche comporte des moyens de solidarisation (36, 38 ; 62f, 62g ; 72k, 72d) qui coopèrent avec des moyens complémentaires (24, 26) prévus sur le plat de récupération des graisses afin de solidariser le support au plat suivant au moins une direction de déplacement de l'équipement et qui correspond à la direction de retrait de cet équipement du four.

## Claims

1. Spit support (12; 62; 72) for an oven of the domestic electrical appliance type, comprising support means (12c, 12d; 62b, 62c; 72b, 72c) that make it able to cooperate with a wall delimiting a cavity internal to the oven, **characterised in that** the spit support comprises securing means (36, 38; 62f, 62g; 72k, 72d) that make it able to be secured to a fat-recovery dish (14) in an oven, in at least one direction of movement of the equipment (10; 60; 70) consisting of the support and dish and which corresponds to the direction of removal of this equipment from the oven.

2. Spit support according to claim 1, **characterised in that** it is in the form of a rigid frame (12; 62; 72) that has at least two distinct locations (32, 34) each able to receive an end of a spit.

3. Spit support according to claim 2, **characterised in that** the rigid frame is produced from metal wire.

4. Spit support according to claim 2 or 3, **characterised in that** the rigid frame (12) forms a closed structure.

5. Spit support according to claim 4, **characterised in that** the means of securing the support are attached to the said frame.

6. Spit support according to claim 5, **characterised in that** the means of securing the support are formed by securing lugs (36, 38) at least part of which is able to engage in recesses (24, 26) formed in the fat-recovery dish (14).

7. Spit support according to claims 3 and 6, **characterised in that** the securing lugs (36, 38) consist of straight portions of metal wire attached substantially perpendicular to the general form of the frame.

8. Spit support according to claim 4, **characterised in that** the means of securing the support are formed by areas of the frame that are deformed locally so as to cooperate with complementary arrangements provided in the fat-recovery dish.

9. Spit support according to claim 8, **characterised in that** the deformed areas of the frame are able to engage in recesses provided in the fat-recovery dish.

10. Spit support according to claim 8 or 9, **characterised in that** the deformed areas of the frame are in a U shape.

11. Spit support according to claim 2 or 3, **characterised in that** the rigid frame (62; 72) forms an open structure having two ends (62f, 62g; 72k, 72h) that constitute the means of securing the support to the fat recovery dish (14).

12. Spit support according to claims 3 and 11, **characterised in that** the ends (62f, 62g; 72k, 72h) of the metal-wire frame are curved substantially perpendicular to the general form of the frame and able to engage in recesses (24, 26) formed in the fat-recovery dish.

13. Spit support according to claim 12, **characterised in that** one (62g; 72h) of the curved ends of the frame is placed close to one (32) of the locations that is able to receive an end of a spit, the part of the frame disposed between the said curved end and the location in question being curved in the direction of the part (62k; 72e) of the frame disposed immediately upstream of the said location with respect to the end.

14. Oven equipment (10; 60; 70) of the domestic electrical appliance type, comprising:
- a spit support (12; 62; 72) comprising support means (12c, 12d; 62b, 62c; 72b, 72c) that make it able to cooperate with a wall (42) delimiting a cavity (44) internal to the oven,
- a fat-recovery dish (14),
**characterised in that** the spit support comprises securing means (36, 38; 62f, 62g; 72k, 72d) that cooperate with complementary means (24, 26) provided on the fat-recovery dish in order to secure the support to the dish in at least one direction of movement of the equipment that corresponds to the direction of removal of this equipment from the oven.

15. Domestic electrical oven (40) comprising:
- a wall (42) delimiting a cooking cavity (44) internal to the oven, and
- oven equipment (10; 60; 70) housed in the cooking cavity, the said equipment comprising:
• a spit support (12; 62; 72) comprising support means (12c, 12d; 62b, 62c; 72b, 72c) that cooperate with complementary means (50) provided on the wall (42) of the oven so that the said support bears on this wall,
• a fat-recovery dish (14),
**characterised in that** the spit support comprises securing means (36, 38; 62f, 62g; 72k, 72d) that cooperate with complementary means (24, 26) provided on the fat-recovery dish in order to secure the support to the dish in at least one direction of movement of the equipment that corresponds to the direction of removal of this equipment from the oven.

## Patentansprüche

1. Spießhalterung (12; 62; 72) für einen Haushaltsbackofen, mit Stützmitteln (12c, 12d; 62b, 62c; 72b, 72c), die dazu führen, dass sie mit einer Wand zusammenwirken kann, die einen Hohlraum innerhalb des Ofens begrenzt, **dadurch gekennzeichnet, dass** die Spießhalterung Verbindungsmittel (36, 38; 62f, 62g; 72k, 72d) aufweist, die dazu führen, dass sie in mindestens einer Verlagerungsrichtung der aus der Halterung und einer Fettauffangplatte bestehenden Ausstattung (10; 60; 70), die der Auszugsrichtung dieser Ausstattung aus dem Backofen entspricht, mit der Fettauffangplatte (14) in einem Backofen fest verbunden sein kann.

2. Spießhalterung nach Anspruch 1, **dadurch gekennzeichnet, dass** sie die Form eines starren Rahmens (12; 62; 72) hat, der mindestens zwei getrennte Stellen (32, 34) aufweist, die jeweils ein Ende eines Spießes aufnehmen können.

3. Spießhalterung nach Anspruch 2, **dadurch gekennzeichnet, dass** der starre Rahmen aus Metalldraht hergestellt ist.

4. Spießhalterung nach Anspruch 2 oder 3, **dadurch gekennzeichnet, dass** der starre Rahmen (12) eine geschlossene Struktur bildet.

5. Spießhalterung nach Anspruch 4, **dadurch gekennzeichnet, dass** die Verbindungsmittel der Halterung an den Rahmen angesetzt sind.

6. Spießhalterung nach Anspruch 5, **dadurch gekennzeichnet, dass** die Verbindungsmittel der Halterung aus Verbindungslaschen (36, 38) gebildet sind, bei denen zumindest ein Teil in Vertiefungen (24, 26) eingreifen kann, die in der Fettauffangplatte (14) ausgebildet sind.

7. Spießhalterung nach den Ansprüche 3 und 6, **dadurch gekennzeichnet, dass** die Verbindungslaschen (36, 38) aus geraden Metalldrahtabschnitten bestehen, die im Wesentlichen senkrecht zur allgemeinen Form des Rahmens angesetzt sind.

8. Spießhalterung nach Anspruch 4, **dadurch gekennzeichnet, dass** die Verbindungsmittel der Halterung aus Rahmenbereichen gebildet sind, die lokal verformt sind, so dass sie mit komplementären Einrichtungen, die in der Fettauffangplatte vorgesehen sind, zusammenwirken.

9. Spießhalterung nach Anspruch 8, **dadurch gekennzeichnet, dass** die verformten Bereiche des Rahmens in Vertiefungen eingreifen können, die in der Fettauffangplatte ausgebildet sind.

10. Spießhalterung nach Anspruch 8 oder 9, **dadurch gekennzeichnet, dass** die verformten Bereiche des Rahmens U-förmig sind.

11. Spießhalterung nach Anspruch 2 oder 3, **dadurch gekennzeichnet, dass** der starre Rahmen (62; 72) eine offene Struktur mit zwei Enden (62f, 62g; 72k, 72h) bildet, die die Mittel zur Verbindung der Halterung mit der Fettauffangplatte (14) bilden.

12. Spießhalterung nach den Ansprüchen 3 und 11, **dadurch gekennzeichnet, dass** die Enden (62f, 62g; 72k, 72h) des Metalldrahtrahmens im Wesentlichen senkrecht zur allgemeinen Form des Rahmens gebogen sind und in Vertiefungen (24, 26) eingreifen können, die in der Fettauffangplatte ausgebildet sind.

13. Spießhalterung nach Anspruch 12, **dadurch gekennzeichnet, dass** eines (62g; 72h) der gebogenen Enden des Rahmens nahe einer (32) der Stellen angeordnet ist, die ein Ende eines Spießes aufnehmen kann, wobei der zwischen dem gebogenen Ende und der betrachteten Stelle liegende Rahmenabschnitt in Richtung des Rahmenabschnitts (62k; 72e) umgebogen ist, der in Bezug auf das Ende unmittelbar vor der Stelle liegt.

14. Haushaltsbackofenausstattung (10; 60; 70), mit:
- einer Spießhalterung (12; 62; 72) mit Stützmitteln (12c, 12d; 62b, 62c; 72b, 72c), die dazu führen, dass sie mit einer Wand (42) zusammenwirken kann, die einen Hohlraum (44) innerhalb des Backofens begrenzt,
- einer Fettauffangplatte (14),
**dadurch gekennzeichnet, dass** die Spießhalterung Verbindungsmittel (36, 38; 62f, 62g; 72k, 72d) aufweist, die mit an der Fettauffangplatte vorgesehenen komplementären Mittel (24, 26) zusammenwirken, um die Halterung in mindestens einer Verlagerungsrichtung der Ausstattung, die der Auszugsrichtung dieser Ausstattung aus dem Backofen entspricht, mit der Platte fest zu verbinden.

15. Haushaltsbackofen (40), mit:
- einer Wand (42), die einen Garraum (44) innerhalb des Backofens begrenzt, und
- einer Backofenausstattung (10; 60; 70), die im Garraum angeordnet ist, wobei die Ausstattung folgendes umfasst:
• eine Spießhalterung (12; 62; 72) mit Stützmitteln (12c, 12d; 62b, 62c; 72b, 72c), die mit an der Wand (42) des Backofens vorgesehenen komplementären Mitteln (50) zusammenwirken, damit sich die Halterung an dieser Wand abstützt,
• eine Fettauffangplatte (14),
**dadurch gekennzeichnet, dass** die Spießhalterung Verbindungsmittel (36, 38; 62f, 62g; 72k, 72d) aufweist, die mit an der Fettauffangplatte vorgesehenen komplementären Mitteln (24, 26) zusammenwirken, um die Halterung in mindestens einer Verlagerungsrichtung der Ausstattung, die der Auszugsrichtung dieser Ausstattung aus dem Backofen entspricht, mit der Platte fest zu verbinden.
